# EUROPEAN PATENT APPLICATION

(11) **EP 3 112 117 A1**
(43) Date of publication of application: **04.01.2017**
(21) Application number: 16382281.0
(22) Date of filing: 17.06.2016
(51) Int. Cl.: B29C 39/00, B29C 41/00, B29C 67/24, B29C 51/02, B29C 51/10, B29K 75/00

(54) **METHOD OF MOLDING A SHEET ON A SUPPORT**

(30) Priority: 01.07.2015 ES 201530948
(71) Applicant: Construplas, S.L., 12600 La Vall de Uxo (Castellon de la Plana) (ES)
(72) Inventor: BENAVENT ESTREMS, Juan Jose, 12600 La Vall de Uxó (Castellón de la Plana) (ES)
(74) Representative: Temiño Ceniceros, Ignacio

(57) **Abstract**

The present invention relates to a method for obtaining a moldable sheet on a molding surface comprising the following steps:
a) applying to the molding surface a cast polyurethane composition comprising a mixture of polyols and isocyanates in a polyol:isocyanate ratio between 100:40 and 100:100;
b) drying the preceding mixture for 4-120 minutes;
c) demolding.

The present invention also relates to the use of said moldable sheet for manufacturing structures such as large, low-weight shower trays or seats.

## Description

### TECHNICAL FIELD

The present invention relates to a method for obtaining a moldable sheet on a molding surface and to the use thereof for manufacturing structures such as large, low-weight shower trays or structures such as seats.

### PRIOR ART

In the state of the art, there are currently different processes for manufacturing sheets from polyurethane compositions, such as the one described in patent application US2009326148 or in patent application US2009312451, however, all these processes comprise a high-temperature curing step.

There is therefore a need to provide a fast, simple and reproducible method in environmental conditions and without requiring massive equipment, for obtaining moldable sheets directly on a molding surface.

### DISCLOSURE OF THE INVENTION

The present invention relates to a method for obtaining a moldable sheet on a molding surface (hereinafter, method of the present invention) comprising the following steps:
a) applying to the molding surface a cast polyurethane composition comprising a mixture of polyols and isocyanates at a polyol:isocyanate ratio between 100:40 and 100:100;
b) drying the preceding mixture for 4-120 minutes;
c) demolding.

In a more particular embodiment, the cast polyurethane composition further comprises fillers consisting of mineral powder with a low moisture content, such as carbonates, silicas (quartz) or alumina.

In a preferred embodiment, the method of the present invention comprises a step prior to step a) in which a lacquer is applied on the molding surface, the lacquer preferably consisting of polyurea.

In another preferred embodiment, the method of the present invention comprises additional step after step c) consisting of giving shape to the sheet directly on the support where the support has the shape of the end product. More particularly, the additional step of molding is performed by depositing the deformable material on the part to be coated. In another particular embodiment, the molding is performed by means of applying pressure or by means of a vacuum system.

In another aspect, the present invention relates to a moldable sheet obtained by means of the method of the present invention (hereinafter moldable sheet of the present invention).

In another aspect of the present invention, the present invention relates to the use of the moldable sheet of the present invention for manufacturing structures such as large, low-weight shower trays or seats.

### DESCRIPTION OF THE DRAWINGS

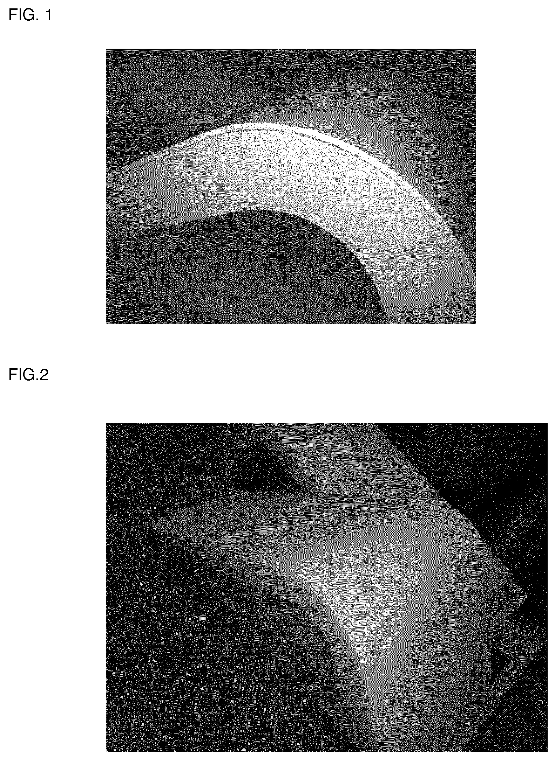

Figure 1 shows the moldable sheet on the curved molding surface.
Figure 2 shows another view of the moldable sheet on a curved surface.
Figure 3 shows the molding sheet of the present invention that has been given the shape of a structure such as a seat for a bath space.

### DETAILED DISCLOSURE OF THE INVENTION

### Example 1: Obtaining a moldable sheet for a shower tray from a cast composition with fillers

The method for obtaining the moldable sheet of the present invention started by preparing the polyurethane composition made up of the mixture of polyols and isocyanates which were at a 1:1 ratio, to which 50% of the total weight was subsequently added in the form of fillers, consisting of mineral powder with a low moisture content, such as carbonates, silicas (quartz) or alumina, among others. In this case, the mixture of isocyanates consisted of diphenylmethane diisocyanate (MDI) and toluene diisocyanate (TDI).

Once the starting material was prepared, it was added to a molding surface which in this case was a sheet of about 3-10 mm thick and of 2x1 m long, and it was left to harden. The hardening time can vary depending on the environmental conditions; the reaction is generally left to continue progressing little by little until a mixture reaches such a consistency that it can be extracted from the mold without breaking, but which continues to be deformable. In this case, the drying step lasted between 4 and 120 minutes.

Then it was demolded, obtaining the moldable sheet.

In this specific case, this moldable sheet was deposited on a shower tray mold, to that end said mold was covered with the moldable sheet such that said sheet adopted the shape of the shower tray by applying direct pressure. Once it had the desired shape, it was left on this surface the time required for it to completely harden, acquiring the shape of the surface.

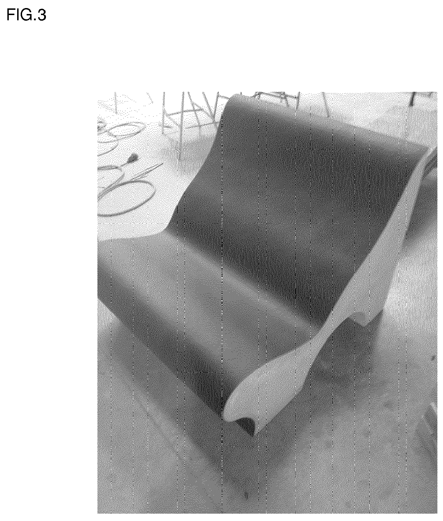

The same example was repeated to obtain the moldable sheet and was then deposited on a seat mold (Figure 3).

### Example 2: Obtaining a moldable sheet for a shower tray from a cast composition without fillers

This method was repeated in the same way as in Example 1, but fillers were not added. This reduced the drying time, such that in order for the sheet to achieve the same hardness as in Example 1, it was left to dry for 2-60 minutes, specifically 20 minutes.

### Example 3: Obtaining a moldable sheet for shower tray from a cast composition with fillers and application of lacquer consisting of polyurea

The method started by preparing the polyurethane composition made up of the mixture of polyols and isocyanates as described in Example 1, but before applying the cast composition a layer of lacquer consisting of polyurea was added on the molding surface. The method continued in the same way as in Example 1, obtaining a moldable sheet that comprised a layer of polyurea giving the final sheet a rubbery effect and greater abrasion resistance.

## Claims

1. A method for obtaining a moldable sheet on a molding surface comprising the following steps:
a) applying to the molding surface a cast polyurethane composition comprising a mixture of polyols and isocyanates at a polyol:isocyanate ratio between 100:40 and 100:100;
b) drying the preceding mixture for 4-120 minutes;
c) demolding.

2. The method according to claim 1, where the cast polyurethane composition comprises fillers consisting of mineral powder with a low moisture content, such as carbonates, silicas or alumina.

3. The method according to claim 1, **characterized in that** it comprises a step prior to step a) in which a lacquer is applied on the molding surface.

4. The method according to claim 3, **characterized in that** the lacquer consists of polyurea.

5. The method according to any of the preceding claims, comprising a step after step c) consisting of molding the moldable sheet by means of direct deposition on the part to be coated.

6. The method according to claim 5, where the molding of the moldable sheet is performed by means of applying pressure or by means of a vacuum system.

7. A moldable sheet obtained according to any of claims 1-6.

8. Use of the moldable sheet according to claim 8 for manufacturing structures such as large, low-weight shower trays or seats.
